# EUROPEAN PATENT APPLICATION

(11) **EP 2 668 849 A1**
(43) Date of publication of application: **04.12.2013**
(21) Application number: 12169826.0
(22) Date of filing: 29.05.2012
(51) Int. Cl.: A23K 1/16, A23K 1/175, A23K 1/18

(54) **Feed additive of plant origin**

(71) Applicant: Dr. Bata Ltd., 2364 Ocsa (HU)
(72) Inventor: Bata, Árpád, 2364 Ócsa (HU); Kutasi, József, 2132 Göd (HU)
(74) Representative: Lengyel, Zsolt

(57) **Abstract**

The invention relates to a feed additive, comprising locust-tree seed and thyme extract and microelement glycinate and microelement glycinate chelate stabilizing agents effective in the small intestine of the digestive tract. The invention further relates to a feed comprising said feed additive, and methods for preparing thereof, as well as the use of the feed additive or the feed in stock farming for increasing body weight gain or egg production, or decreasing mortality in pig stocks.

## Description

Swine dysentery is a widespread disease worldwide, as well as in Hungary. Except for the SPF pigs, the disease is clinically present in one third of the stocks, and a further significant portion of the stocks is infected without symptoms. Due to the direct loss and the high cost of treatment, the disease is one of the most economically important ones in Hungary and in the other major pig raising countries. At the same time, in the recent decades there is worldwide interest for the use of natural, mostly plant-origin, substances in medicine, and the food, conservation and cosmetic industries.

The disease first was described by Whiting, Doyle and Spray (1921) in the United States of America. In Hungary, its pathology was described by Hegyeli and Hirt (1942), and Manninger and Csontos (1943) named it as an infectious swine stomach and intestinal inflammation. Although always emphasizing the infectious nature of the disease, its pathology hypothesized several different microorganisms (viruses, *Campilobacter* (*Vibrio*) *coli,* spirochaeta, trichomonas, etc.). The etiology of the disease was clarified only at the beginning of the seventies, despite its high economical impact. The pathogen was first cultured by Taylor and Alexander (1971) in the UK, and Harris et al. (1972) in the US, and clarified its etiologic role to cause the disease.

In the recent decades there is worldwide interest for the use of natural, mostly plant-origin, substances in medicine, and the food, conservation and cosmetic industries. There are more than five hundred publications that discuss the composition and effectiveness of these substances.

The pathogen is the *Brachyspira* (earlier *Serpulina,* before that *Treponema*) *hyodysenteriae,* a spirochaeta with long, broad, uneven spires. It can be stained by both phenol-fuchsine and Giemsa, can be cultured on blood agar under anaerobic conditions. Spektinomycin containing media can be used for its selective culturing. Under and around the virulent strains, strong beta-hemolysis occurs. Hemolysin is a low molecular weight peptide with cytotoxic properties. Based on the lipopolysaccharide antigens extracted from the cell wall, *B. hyodysenteriae* strains can be classified into 9 serogroups by AGP (agar gel precipitation) assay. However, there are further fine differences between the strains of the same serogroups based on antigen structures.

The hardiness of brachyspirae is low, they die within minutes over 60 °C and with disinfectants, and within days when dried, but in the mucous, bloody faeces they remain viable for at least a week in the summer, and up to two months in the winter. Similarly, the pathogen may survive for months in the slightly alkaline manure.

The pathogen may colonize the intestines of the mice, rats and dogs living at swine ranches. It can be excreted by rats for a few days, by dogs for a few weeks, but for months by mice.

Its role in the etiology of the disease is proven by the fact that the disease was successfully produced artificially in both specific pathogen free (SPF) and conventional pigs. For the understanding of pathogenesis and successful protection, it should be emphasized that gnotobiotic piglets were only successfully infected when the brachyspirae were introduced into the body together with anaerobic bacteria normally present in the intestine. This can be explained by the synergistic effect between the brachyspirae and the normal anaerobic bacteria, such as primarily of the Bacteroides genus, as well as fusobacteria. According to the hypotheses, these microorganisms provide the suitable microenvironment and substrate for the propagation of brachyspirae. Therefore, it cannot be by accident that in addition to the presence of high amounts of brachyspirae in the intestinal content of pigs affected by swine dysentery, an imbalance of the equilibrium of the normal intestinal flora is also noticeable.

In acute swine dysentery, the number of enterococci and lactobacilli is significantly decreased in the intestinal flora, and at the same time, the number of fusobacteria, bacteria of the genus Bacteroides, *E. coli* and certain coliform bacteria is increased. In chronic cases, an increase of clostridia is apparent. The increase in the ratio of the accompanying and residual flora to the main flora results in the cease of eubiosis, and a dysbiotic state is formed instead. The dysbiotic flora means an increased burden on the host organism. In this state, the feed utilization worsens, the yield decreases, and in more severe case, the animals may die.

The development of herbal based products that are suitable to replace antibiotics and competitive in effect are needed.

The different medicinal and ethereal plants, and the extracts made therefrom are widely used in native cultures from ancient times, their antimicrobial effect are also known for long.

In the case of herbal extracts, it can often be demonstrated some antimicrobial inhibitory effect, as well as "intestinal flora improving", probiotic effect. One of the most prevailing such compound is e. g. the extract of thyme oil.

The most products with medicinal plant that are yield-increasing comprise the plant itself, or some kind of extract thereof. The problem lies in the fact that the drug content of medicinal plants is varies significantly. It depends on the place of production, time of harvest, therefore their use is questionable from the point of safety, but at least it cannot be standardized. A further problem with the drugs of medicinal plant origin is the possibility and risk of the appearance of the residual drugs within the foods.

*Thymus vulgaris L.* (common thyme) belongs to the order of Lamiales, family of Lamiaceae. It is a perennial sub-shrub, with flowering between May and July. It is indigenous in the Mediterranean, not endemic in Hungary, but it may be cultivated. Its active ingredients are mainly ethereal oils, which are contained in about 1-2.5%. The main components of the ethereal oils are the thymol, occurring in about 20-60%, and the carvacrol, in about 25%.

Thyme contains, in addition to the ethereal oils, carotinoids, polyphenols, flavonoids, among others. The antiviral, antibacterial and antifungal activities of thymol and carvacrol are known to be one magnitude higher than that of phenol, while the carotinoid, polyphenol and flavonoid compounds have radical scavenger and antioxidant capacity.

According to some studies, the oil of thyme completely inhibited the proliferation of Gram positive microorganisms even in the presence of blood. Its inhibitory effect on the proliferation of Pseudomonas strains was weaker, and stronger on other Gram negative microorganisms, as well as on some fungus. The antibacterial and antifungal effects of the ethereal oil of thyme and different extracts thereof have been studied for a long time. The studies so far have clearly proven its effectiveness against a wide variety pathogenic and food spoiling microorganisms (Dorman and Deans, 2000; Pasqua et al., 2005; Arnal-Schnebelen et al., 2004; Angelini et al., 2006).

According to some of these studies, its activity on Gram positive bacteria is higher than on Gram negatives (Farag et al., 1989; Smith-Palmer et al., 1998; Marino et al., 1999; Kalemba, 1999), while others also found pronounced effect against Gram negatives (Penalver et al., 2005; Ashour et al., 2005; Oussalah et al., 2006). There are no data, however, on the anti-Brachyspira activity of thyme. Because of this, we studied the aqueous extract of thyme against the pathogen of swine dysentery.

In preliminary laboratory studies, it was surprisingly found that in the case of some medicinal plants, preferably extracts of several medicinal plants synergistic effect can be seen. The compositions studied also contained, in addition to the thyme extract, a meal prepared from the endospermium of natural strains of locust-tree (Ceratonia siliqua). The meal is formed from high molecular weight, hydrocolloid polysaccharides comprised of galactopyranose and mannopyranose units connected by glycoside bounds, chemically described as galactomannane. The galactomannane content is at least 75%. The seed meal is used for food applications and as an additive for baby formulas (E 410).

The combinations of aqueous extracts of thyme and locust-tree seeds inhibited in a concentration-dependent manner the vitality of *Brachyspira hyodysenteriae,* the pathogen known as the causative agent of swine dysentery in our agar diffusion assays. This shows good correlation with the results of others with different microbes (Magda et al., 2000; El-Astal et al., 2004; El-Astal et al., 2005; Czapska et al., 2006).

The European Union bans the preventive and yield-increasing use of virginiamycin, tylosin, spiramycin and bacitracin in feeds since 1999. The regulation is tightened on January 1, 2006, and the EU member states completely banned the use of antibiotics for disease prevention and yield enhancement. The present method is especially significant, because the active ingredients present in thyme affect antibiotic resistant microbes (Nelson et al., 1997; Hersch et al., 2005; Friedman et al., 2006), therefore the antibiotics can be replaced as necessary (Onibala et al., 2001; Urbanczyk et al., 2002), and can be considered as an alternative for yield enhancement (Demir et al., 2005), and with their use, the conditions for safe food production is environment-consciously improved.

Accordingly the present invention provides an animal feed additive, comprising locust-tree seed and thyme extract and microelement glycinate and micro-element glycinate chelate stabilizing agents effective in the small intestine of the digestive tract.

In another embodiment, the invention provides a feed additive for monogastric animals.

In a further embodiment, the invention provides a feed additive, in releasable form from a suitable carrier material.

In a specific embodiment, the invention provides the feed additive, wherein the carrier material is cellulose based waste of processed plant materials.

In a further specific embodiment, the invention provides the feed additive, wherein the carrier material comprises ground corn-cob and/or ground chicory plant.

In a further embodiment, the invention provides the feed additive wherein particle size of the carrier material is 30-500 micrometer.

In another specific embodiment, the invention provides a feed additive, wherein the stabilizing agent is zinc monoglycinate and/or zinc bisglycinate and/or zinc diglycinate.

In a further specific embodiment, the invention provides a feed additive, wherein the stabilizing agent is copper monoglycinate and/or copper bisglycinate and/or copper diglycinate.

In a further embodiment, the invention provides a feed additive comprising a material with high starch content, preferably feed meal.

In another embodiment, the invention provides a feed additive that is granulated.

In another aspect, the invention provides a Feed, comprising the feed additive according to the invention.

In another aspect, the invention provides a method for the preparation of a feed additive, comprising mixing together locust-tree seed and thyme extract, microelement glycinates and microelement glycinate chelate stabilizing agents, and optionally further standard feed additive components.

In further related aspect, the invention provides a method for the preparation of a feed, comprising admixing the feed additive according to the invention to standard feed.

In a further embodiment, the invention provides the use of the feed additive or the feed according to the invention, or the feed additive or feed prepared according to the invention, in stock farming for increasing body weight gain or egg production, or for decreasing mortality in pig stocks.

The main advantages of the products of the invention can be summarized as follows:
- First, according to our knowledge, there is no specific, herbal-based, efficient and antibiotic free protection method against the mentioned swine diseases on the world market, similar to the developed products.
- The project involves the development of the active ingredients into products, rather the plants themselves.
- The products will not contain a single medicinal plant, but a suitable combination of active ingredients as appropriate for the goal to be achieved.
- Synergies between the active ingredients are sought and used.
- Residual compound components are removed from the herbal extracts, therefore the developed products are risk-free from food safety standpoints.
- Efficiency of herbal extracts is enhanced by chemical processes. The stabilizing effect of microelement glycinate chelate compounds enhances the herbal active ingredients.
- Microelement glycinate chelates are found in human medicinal products, but the manufacturers of these are not competitors since they are not producers of the veterinary market.
- (Medicinal) plant products are mostly used for flavor enhancement in animal feeds. Ayurvet Compani is one of the largest producers of feed additive products in India. It has several medicinal plant products, but these are not for the prevention of the swine diseases described herein, therefore are not competitors of the products of this project. Ruchamax and Yakrifit are herbal-based yield-increasing products for ruminants. There is information of their testing in Hungary (SzIE ÁOTK), but the observations are not advantageous. Superliv and Ayucee are medicinal plant mixtures developed for poultry.

The medicinal plant product (Diakam) of the Indian company Kamdhenu Feeds against diarrhea is useful for the amelioration of the general symptoms. It has no specific effect on diseases. There is no experience with these products in Europe.

### Concentration of medicinal plant extracts

Ultrafiltration is a separation technique used for a long time in the fermentation industry. It is used for the filtration or fractional concentration of molecules with a molecular weight of 1000 kilodalton (kDa) or less, when the goal is to remove a molecule with known size, e. g. larger than 10 kDa but smaller than 100 kDa. There are two main types of membrane filtration: the membrane and hollow fiber filtration. During membrane filtration, the extracts are passed through membrane sheets with a given pore size with a given pressure, therefore it is a classic filtration technique. Hollow fiber filtration is carried out in capillary tubes which have a surface with a given kDa cut-off value. The filtered liquid is circulated in these perforated capillaries until the larger part of the smaller molecular weight materials is removed, and the concentrate remains in the capillaries. A novel use of this technique is the concentration of medicinal plant extracts. The less than 100 kDA molecular size fraction of the aqueous and/or isopropanol extracts is circulated in the 1 kDa cut-off capillary tubes to concentrate it, thereby producing the concentrated versions of medicinal plant extracts.

### Microelement glycinate chelates and formulation thereof

Minerals play a diverse and essential role in the physiological and biochemical operations of living organisms. Among others, they are components of enzymes (Zn, Cu, Mn, Mg, Fe), (Fe, Mn, Zn, Cu, Mg, K) and vitamins (Co), they have specific role in different protective mechanisms (Cu, Zn, Fe, Se), participate in hematogenesis (Cu, Fe), reproduction (P, Cu, K, Mn, Zn, Mg), facilitate the synthesis of nucleic acids and proteins.

The microelement content of feed plants depends of several factors (e. g. climate, applied agrotechnique, environmental pollution, etc.), and varies widely. However, livestock bred to high yield require an increased and equilibrated mineral (including microelement) supplementation. This requirement is almost solely satisfied through the feed, mainly admixing different mineral salts into the feed provided.

The factories producing premixes uses the inorganic forms of microelements, despite the fact that these elements are present in the plants mainly in organic compounds, and that the scientific research of the past 10-15 years made the advantage of using microelements in organic bounds clear compared to the inorganic forms.

The metal-containing organic complex is one of the main compound forms in biological systems. The metal ion occupies the central position in these complexes, and ions, molecules, natural organic compounds (amino acids, peptides, proteins, carbohydrates, etc.), i. e. ligands attach thereto. The chemical reactions between certain ions and organic compounds produce chelates, when the metal ion is attached to two or more atoms of a ligand. Chelate compounds with metal-ligand interactions are the most valuable to the organism, because the activity of the metals in these complexes 10⁵-10⁷-fold higher than in ionized form.

In the case of most microelement the following chelate complexes are formed: complexes formed with amino acids, proteins, organic acids, etc. out of which the protein (amino acid) microelement complexes are elementary. Recently promising results were achieved — independently from species, age and use — mainly with Se, Cr, Zn, Cu, Mn and Fe in more efficient microelement provision.

At the same time, the copper and zinc glycinate provided in organic form not only utilized better, but surprisingly have inhibiting effect on the microorganisms. It is an important factor in the action mechanism of the microelement organic copper and zinc glycinate chelates that they are able to inhibit the proliferation of Gram negative pathogen or facultative pathogen bacteria present in the feed, therefore the useful members of the intestinal flora, e. g. bifidobacteria and lactobacilli, may prevail. The organic bound microelement glycinate compositions in admixture with medicinal plants are effective for recovering the balance of the intestinal flora, for the production thereof and for fighting the facultative pathogenic microorganisms that are risk for the health of the animals.

Further, a basic question of microelement administration is how to prevent the interaction of the metal ions with the other components of the intestinal flora before absorption, and this can be achieved by providing a granulated formulation.

The physical properties of the ideal extrudate for the extruding and spheronizing steps used during granulation are determined by the humidity of the paste prepared from the medicinal plant extract, the microelement glycinate and the additives, as well as the ratio of the auxiliary material included therein. Additives used in food and pharmaceutical industry, such as microcrystalline cellulose (a crystalline form of cellulose), or polyvinyl-pyrrolidone, (Sigma-PVP) as well as PVP and CMC. Generally they are used as carrier, emulsifying and excipient for granulation. The bind and enclose humidity, resulting in their particles to swell, thus the space between the particles provide ideal environment for the bacteria. CMC is used due to its high viscosity properties in food industry, as well as other industries. It is not toxic, does not induce allergy, does not accumulate in the ground. By absorbing water, it can be used as adhesive in the granules. PVP provides high water retaining ability, since it can absorb 40% of its own weight. Because the granules are exposed to significant physical impact during spheronization, the proper cohesion and water reservoir ability of the particles is important. Absorption of the water content to high viscosity polymers is necessary to avoid the precipitation of water, and thus the sticking of granules during the technological steps. A completely homogeneous "mass" has generally a consistency of wet powder, therefore it is not like a paste in the everyday sense.

The paste produced is extruded by means of press extrusion: compressed by filling into a tube, and the extrudate is pressed into threads in a screw extruder at a predetermined rpm, then collected.

During extrusion, the paste is compressed at a high pressure and is recovered in the form as long threads, which, if they have the proper length, strength and consistency, can be granulated into beads in a spheronizer. During spheronization, the extrudate is exposed to high physical impact, and the water content not properly bound is precipitated onto the surface of the extrudate or granules. In this case the granulated particles are stick together, and their size may reach the diameter of 5-6 mm. Spheronization is carried out on a metal plate grooved in a checkered pattern and rotating at high revolution, where the thin paste threads are sheared according to the density of the grooves, then spheronized according to the revolution number. The granules are hardened during spheronization due the formation a shell by the continuous air injection, and their structure is maintained.

### Examples 1

For the *in vitro* experiments, a cold (25 °C) aqueous extract of the drug was prepared. Three grams of the fine powder of the plant sample was measured, and was shaken with 100 ml distilled water at room temperature for 1 hours, then was filtered through several times on different molecular weight cut off (1 kDa, 10 kDa, 100 kDa, 500 kDa) ultrafiltration membrane columns (KOCH/Romicon WF2, Hollow Fibre), then the filtrates numbered 2005/89 and 2005/94 were used for the preparation dilution series, until to a concentration of 1 : 20 000.

### Example 2

The locust-tree seed meal was extracted for 2 hours at 40 °C in aqueous solution, then was further extracted by the addition of 20% isopropanol. The extract was filtered as described in Example 1 through 100 kDa column, then concentrated through 1 kDa column, then a dilution series was prepared from the concentrated extract until to a concentration of 1 : 20 000.

The precipitated extract from the concentrated isopropanol-water fraction was studied.

### Example 3

The studies on antimicrobial effect was carried out on the strain *Brachyspira hyodysenteriae var. Bata* isolated from store-pigs showing the clinical symptoms of swine dysentery, then further strains of *Brachyspira hyodysenteriae,* isolated at 5 different ranches, were included in the study. According to the well-known agar diffusion protocol, test organisms were spread onto blood agar medium, then wells were cut into the agar plates under sterile conditions. The extracts to be studied were pipetted into the wells, then were incubated for 24 - 48 hours at 35 °C. In the case of an active sample, the test organisms die around the agar wells, and inhibition zones can be observed in the form of smaller or larger rings. The antibacterial activity can be deduced from the measurement of the diameters of the inhibition zones.

### Isolation of Brachyspira hyodysenteriae and agar diffusion assay thereof:

*B. hyodysenteriae* strains were isolated from growing and store-pigs showing the clinical symptoms of swine dysentery, raised in different regions of Hungary. After bleeding at the slaughterhouse, the colon snares of the pigs showing clinical signs were tied down and were transported to the laboratory within six hours. After opening the colon sections, the sample was provided as a scraping from the colon mucosa. In every case, the mucosal scrapings on a streaker were spread onto the surface of freshly prepared TSA agar (Scharlau Microbiology) supplemented with 10% defibrinated bovine blood and 400 µg/ml spectinomycin (Sigma-Aldrich Kft.) as inhibitor. After inoculation, the cultures were incubated for 96 hours at +42 °C under strictly anaerobic conditions. The anaerobic conditions were achieved by using anaerobic gas generating pouches (Oxoid, Gas Generating Kit, Anaerobic system BR0038B) and anaerobic culturing jars (Oxoid, Anaerobic jar). The determination of the primary and secondary biochemical properties and the identification of the isolated strains was carried out by standard techniques (Quinn et al., 1994). After identification and until using in the assays, the strains were stored in suspended form in TSB broth (Scharlau Microbiology) with 25% sterile glycerol frozen at -80 °C.

The strains were stored beforehand frozen at -25 °C. From the thawed bacterial mass, precultures were prepared on blood agar (modified trypton-soy agar, supplemented with 5-10% defibrinated bovine blood). From the visibly well-hemolyzed preculture agar plates, 8-10, nearly the same sized (±5% difference) agar block inoculates were excised, then were spread onto 90 mm diameter freshly prepared agar plates with about 5 mm diameter glass rods. The plates were dried in covered form for 5 minutes.

According to the order developed in the laboratory, the inoculated plates were punched out in the middle with an agar disk cutting device. The 5 mm diameter wholes were placed at least 40 mm from the edge of the plates, to allow easy evaluation of large inhibition zones around sensitive isolates. Accordingly, the whole formed on the 90 mm diameter culture plate included only a single sample. After applying the thyme extract of a given concentration, the plates were placed into an anaerostat (Oxoid anaerobic pouch and jar) within 15 minutes, and incubated at 37 °C for 4-5 days in oxygen free atmosphere.

The studied strains were classified according to the size of the diameter of the hemolysis inhibition ring around the plate wholes to determine their sensitivity to the given concentration of the aqueous thyme drug extract.

The label **sensitive (S)** (the diameter of the inhibition ring is >25 mm) indicates that the bacterium is sensitive to the given concentration *in vitro* and dies.

The **moderately sensitive (M)** result (the diameter of the inhibition ring is 15-25 mm) indicates that the *in vitro* effect of the given concentration is questionable.

The label **resistant, non-sensitive (R)** (10 mm or a similar sensitivity diameter) indicates *in vitro* ineffectiveness.

### Results:

The results are summarized in Tables 1, 2, 3 and 4.

**Table 1 - Effect of the different dilutions of herbal medicinal plant and glycinate chelate extracts on Brachyspira hyodysenteriae (B/06) strain in agar diffusion assay**

| ***Antimicrobial assay samples*** | **Dilution** | **Sensitivity zone diameter (mm)** | **Evaluation** |
|---|---|---|---|
| **Composition No. 89** | 500 x | 50 | **s** |
| **Composition No. 89** | 1000 x | 45 | **s** |
| **Composition No. 89** | 2500 x | 32,5 | **s** |
| **Composition No. 89** | 5000 x | 35 | **s** |
| **Composition No. 89** | 10000 x | 30 | **s** |
| **Composition No. 89** | 20000 x | 15 | **M** |
| | | | |
| **Composition No. 94** | 500 x | Complete hemolysis inhibition | **s** |
| **Composition No. 94** | 1000 x | 50 | **s** |
| **Composition No. 94** | 2500 x | 47 | **s** |
| **Composition No. 94** | 5000 x | 40 | **s** |
| **Composition No. 94** | 10000 x | 28 | **s** |
| **Composition No. 94** | 20000 x | 25 partial | **M** |

The label **sensitive (S)** (the diameter of the inhibition ring is >25 mm) indicates that the bacterium is sensitive to the given concentration *in vitro* and dies.

The **moderately sensitive (M)** result (the diameter of the inhibition ring is 15-25 mm) indicates that the *in vitro* effect of the given concentration is questionable.

The label **resistant, non-sensitive (R)** (10 mm or a similar sensitivity diameter) indicates *in vitro* ineffectiveness.

Composition No. 89 of the medicinal plant extract and glycinate chelate is effective even in a 10000x dilution, and the pathogenic *Brachyspira hyodysenteriae* (B/06) is sensitive thereto. Composition No. 94 of the medicinal plant extract and glycinate chelate is effective even in a 20000x dilution, and the pathogenic *Brachyspira hyodysenteriae* (B/06) is sensitive thereto.

**Table 2 - Effect of the different dilutions of thyme medicinal plant extracts on Brachyspira hyodysenteriae (B/06) strain in agar diffusion assay**

| ***B. hyodysenteriae strains*** | **Active ingredient and dilution** | **Sensitivity zone diameter (mm)** | **Evaluation** |
|---|---|---|---|
| Bata | (5000 x) | 38 | **S** |
| 171/06 | (5000x) | 29 | **S** |
| 168/06 | (5000x) | 26 | **S** |
| 167/06 | (5000x) | 25 | **S,M** |
| 169/06 | (5000x) | 31 | **S** |
| 170/06 | (5000x) | 32 | **S** |

| | | | |
|---|---|---|---|
| **S = sensitive; M = moderately sensitive; R = resistant** | | | |

The medicinal plant extract is effective even in a 5000x dilution, and all of the pathogenic Brachyspira hyodysenteriae strains are sensitive thereto.

**Table 3 - Effect of the different dilutions of herbal medicinal plant and glycinate chelate No 94 extracts on Brachyspira hyodysenteriae strains in agar diffusion assay**

| ***B. hyodysenteriae* strains** | **Sample No. 2005/94 and dilution thereof** | **Inhibition zone diameter (mm)** | **Evaluation** |
|---|---|---|---|
| 167/06 | 5000 x | 25.0 | **M** |
| 168/06 | " | 6.0 | **S** |
| 169/06 | " | 31.0 | **S** |
| 170/06 | " | 32.0 | **S** |
| 171/06 | " | 29.0 | **S** |
| B/06 | " | 38.0 | **S** |
| **X** | | **30.2** | **S** |
| **SD** ± | | **4.7** | |

| | | | |
|---|---|---|---|
| **S = sensitive; M = moderately sensitive; R = resistant** | | | |

Composition No. 94 of the medicinal plant extract and glycinate chelate is effective even in a 5000x dilution, and all of the pathogenic Brachyspira hyodysenteriae strains are sensitive thereto.

**Table 4 - Effect of the different dilutions of herbal medicinal plant and glycinate chelate extracts**

| ***B. hyodysenteriae strains*** | **Active ingredient and dilution thereof** | ***B. hyodysenteriae* sensitivity zone diameter (mm)** | **Phenotypic evaluation** |
|---|---|---|---|
| 171/06 | 95 (500x) and 94 (5000x) | 29 | **S** |
| 171/06 | 95 (500x) and 94 (5000x) | 28 | **S** |
| 168/06 | 95 (500x) and 94 (5000x) | 26 | **S** |
| 167/06 | 95 (500x) and 94 (5000x) | 25 | **S** |
| 169/06 | 95 (500x) and 94 (5000x) | 31 | **S** |
| 167/06 | 95 (500x) and 94 (5000x) | 25 | **S** |
| 170/06 | 95 (500x) and 94 (5000x) | 30 | **S** |
| 170/06 | 95 (500x) and 94 (5000x) | 32 | **S** |

| | | | |
|---|---|---|---|
| **S = sensitive; M = moderately sensitive** | | | |

Composition No. 89 and No. 94 of the medicinal plant extract and glycinate chelate is effective even in a 5000x dilution, and all of the pathogenic Brachyspira hyodysenteriae strains are sensitive thereto.

### Example 4

In this example the thyme - locust-tree seed medicinal plant extract that is concentrated with ultrafiltration, as prepared in Examples 1 and 2, are mixed together in 1:1 ratio and admixed with ground chicory and 100 ppm zinc-containing microelement glycinate zinc monoglycinate and/or zinc bisglycinate and/or zinc diglycinate stabilizing agent, and spray dried at 90 °C inlet and 60 °C outlet air temperatures.

### Example 5

In this example the thyme - locust-tree seed medicinal plant extract that is concentrated with ultrafiltration, as prepared in Examples 1 and 2, are mixed together in 1:1 ratio and admixed with ground corn-cob and 15 ppm copper-containing copper monoglycinate and/or copper bisglycinate and/or copper diglycinate stabilizing agent, and dried on fluid-bed at 70 °C inlet and 50 °C outlet air temperatures.

### Example 6

### Preparation of granulated formulation

### The auxiliary agents determining the form of granulate:

**Microcrystalline cellulose** (Jrs-Vivapur®), hereinafter referred to as Vivapur. It is an additive used in the food and pharmaceutical industries, a crystalline form of cellulose.

**Sodium salt of carboxy-methylcellulose** (Sigma-CMC), hereinafter referred to as CMC. CMC is used due to its high viscosity properties in food industry, as well as other industries. By absorbing water, it can be used as adhesive in the granulate.

**Polyvinyl-pyrrolidone,** (Sigma-PVP), hereinafter referred to as PVP. Important for the proper cohesion and water reservoir ability of the particles.

An hour of homogenization is required for the cellulose to absorb the humidity, to swell and to form the proper microcrystalline conformation and thus provide ideal environment for the survival of the cells. Mixing apparatus to produce homogeneous paste: Kendwood, UK

Granulation (extrusion - spheronization) preferably takes place in a 4M-8 ExtruSpher (Pro-C-Ept) apparatus. Extrusion occurs at 35 °C. Parameters of extrusion: 40 rpm, slow screw rotation and compression. Extruder sieve size: 1.0 mm. Parameters of spheronization: 3.25 mm grooved plate, 1400 RPM, allows reaching the desired granule size (1-2 mm).

The granules are dried on fluid-bed as described in Example 5.

**Table 6 —Granulation protocol**

| Designation of the powder component to be granulated | Amount of granulate powder component (g) | Sum of powder % |
|---|---|---|
| Copper glycinate (15 ppm copper content) or zinc glycinate (100 ppm zinc content) | 60 | 40 |
| Feed meal | 25 | 16.6 |
| Wheat flour, food quality | 15 | 10 |
| PVP | 5 | 3.33 |
| Microcrystalline Cellulose (Vivapur®) | 40 | 26.66 |
| CMC- Na (Sigma) | 5 | 3.33 |
| Sum of dry component | 150 | 100 |
| | | |

| Designation of the liquid component to be granulated | | |
|---|---|---|
| Thyme extract concentrate | 30 | 66.66 |
| Locust-tree extract concentrate | 15 | 33.33 |
| Sum of wet components | 45 | 100 |

### Example 7

The 1:1 ratio mixture of the medicinal plant extracts according to Examples 1 and 2, formulation-variations prepared for field testing (**Biosantrix [1, 2, 3, and 4**) after completed *in vitro* assays similar to the techniques described above in Examples 4, 5, and 6 for dried and granulated compositions, as well as the efficiency of the excipient components were tested in different dilutions on a *Brachyspira hyodysenteriae* strain (Table 6).

The *Brachyspira hyodysenteriae* bacterial strain appeared sensitive *in vitro* (**S**) for two dilutions of Biosantrix sample mixtures, while the excipient components proved to be ineffective alone.

**Table 7 — Antibiogram**

| ***Antimicrobial assay samples*** | **Dilution** | ***B. hyodysenteriae* sensitivity zone diameter (mm)** | **Phenotypic evaluation** |
|---|---|---|---|
| Biosantrix 1 concentrate mixture | 5000 x | 28 | **S** |
| Biosantrix 2 spray dried | 5000 x | 35 | **S** |
| Biosantrix 3 Fluid-bed dried | 2500 x | 40 | **S** |
| Biosantrix 4 granulated | 2500 x | 47 | **S** |
| Biosantrix excipient dried | 500X | 13 | **R** |
| Biosantrix excipient granulated | 250x | 0 | **R** |

The mixture Biosantrix (No. 89, No. 99, and No. 94) of the medicinal plant extract and glycinate chelate is effective even in a 2500x dilution, and all of the pathogenic Brachyspira hyodysenteriae strains are sensitive thereto.

### Example 8

### Pilot experiments with a composition comprising thyme extract and zinc and copper glycinate stabilizing agent

Experimental feeding was performed growing pigs on two occasion, under pilot environmental conditions. The control and experimental groups both comprised of 100 store-pigs. The latter group received the experimental composition, in the 5 kg/ton feed dose as determined in laboratory tests. In the first study, the control group received a preventive dose of Getroxel (karbadox) in its feed (Table 7). In the second study, only individual treatment of pigs suffering from dysentery was carried out (Table 8). The parameters studied: number of treatments, development of losses, average slaughter weight, and feed utilization.

**Table 8 — Effect of phytobiotic composition on the yield and health of store-pigs (Experiment 1)**

| **Designation** | **Control group (Getroxel)** | **Experimental group** |
|---|---|---|
| Number of animals | 100 | 100 |
| Initial average weight (kg) | 31.5 | 31.7 |
| Number of treatments | 1 | 4 |
| Die off | 0 | 0 |
| Average slaughter weight (kg) | **109.5** | **112.3** |
| Feed uptake (kg) | 25877 | 25071 |
| Feed utilization (kg/kg) | **3.31** | **3.11** |

**Table 9 — Effect of the phytobiotic composition on the yield of store-pigs and on the number of individual treatments (Experiment 2)**

| **Designation** | **Control Group** | **Experimental group** |
|---|---|---|
| Number of animals | 100 | 100 |
| Initial average weight (kg) | 28.4 | 28.1 |
| Number of individual treatments (Baytril im.) | **21** | **2** |
| Die off | 0 | 0 |
| Average slaughter weight (kg) | **105.8** | **109.8** |
| Feed uptake (kg) | 25035 | 24175 |
| Feed utilization (kg/kg) | **3.23** | **2.96** |

In the first experiment (Table 7), after the same length of fattening time, the slaughter weight in the experimental group was 2.8 kg higher, i. e. 2,6% on average, compared to the control group, and the feed amount necessary to produce 1 kg live weight was 0,2 kg less, which means 6% increase in feed utilization. The second time (Table 8), after the same length of fattening time, the slaughter weight in the experimental group was 4 kg higher, i. e. 3.8% on average, compared to the control group, and the feed amount necessary to produce 1 kg live weight was 0.27 kg less, i. e. the feed utilization was 9% less compared to the control animals. There was **ten-fold more (21) treatment in the control group for swine dysentery, compared to the control group (2).**

## Claims

1. Feed additive, comprising locust-tree seed and thyme extract and microelement glycinate and micro-element glycinate chelate stabilizing agents effective in the small intestine of the digestive tract.

2. The feed additive according to claim 1, for monogastric animals.

3. The feed additive according to claim 1 or 2, in releasable form from a suitable carrier material.

4. The feed additive according to any one of claims 1 to 3, wherein the carrier material is cellulose based waste of processed plant materials.

5. The feed additive according to claim 4, wherein the carrier material comprises ground corn-cob and/or ground chicory plant.

6. The feed additive according to any one of claims 1 to 5, wherein particle size of the carrier material is 30-500 micrometer.

7. The feed additive according to any one of claims 1 to 6, wherein the stabilizing agent is zinc monoglycinate and/or zinc bisglycinate and/or zinc diglycinate.

8. The feed additive according to any one of claims 1 to 6, wherein the stabilizing agent is copper monoglycinate and/or copper bisglycinate and/or copper diglycinate.

9. The feed additive according to any one of claims 1 to 8, comprising a material with high starch content, preferably feed meal.

10. The feed additive according to any one of claims 1 to 9, which is granulated.

11. Feed, comprising the feed additive according to any one of claims 1 to 10.

12. Method for the preparation of a feed additive, comprising mixing together locust-tree seed and thyme extract, microelement glycinates and microelement glycinate chelate stabilizing agents, and optionally further standard feed additive components.

13. Method for the preparation of a feed, comprising admixing the feed additive according to any one of claims 1 to 10 to standard feed.

14. Use of the feed additive according to any one of claims 1 to 10, or the feed according to claim 11, or the feed additive or feed prepared according to claims 12 or 13, in stock farming for increasing body weight gain or egg production, or for decreasing mortality in pig stocks.
